**Europäisches Patentamt**

**European Patent Office**

**Office européen des brevets**

(19)

(11) Numéro de publication: **0 223 696**
**B1**

(12)

# FASCICULE DE BREVET EUROPEEN

(45) Date de publication du fascicule du brevet:
**11.10.89**

(51) Int. Cl.⁴: **F16K 11/04,** F16K 15/18,
A47J 37/12

(21) Numéro de dépôt: **86402477.3**

(22) Date de dépôt: **05.11.86**

(54) Valve de contrôle de flux, notamment pour l'alimentation en huile d'une cuve de friture.

(30) Priorité: **08.11.85 FR 8516548**

(43) Date de publication de la demande:
**27.05.87 Bulletin 87/22**

(45) Mention de la délivrance du brevet:
**11.10.89 Bulletin 89/41**

(84) Etats contractants désignés:
**BE DE FR GB IT NL SE**

(56) Documents cités:
**EP-A- 0 000 012**
**CH-A- 364 951**
**FR-A- 2 166 836**
**FR-A- 2 501 491**
**US-A- 2 347 204**
**US-A- 3 070 112**

(73) Titulaire: **Mariotti, René, 30 rue du Calvaire,**
**F-92210 Saint-Cloud(FR)**

(84) Etats contractants désignés: **BE DE FR GB IT NL**

(73) Titulaire: **ORE-IDA VENDED PRODUCTS, INC.,**
**250 Bobwhite Court, Boise, Idaho 83706(US)**

(84) Etats contractants désignés: **SE**

(72) Inventeur: **Mariotti, René, 30 rue du Calvaire,**
**F-92210 Saint-Cloud(FR)**

(74) Mandataire: **Sauvage, Renée, Cabinet Sauvage 100 bis,**
**avenue de Saint-Mandé, F-75012 Paris(FR)**

## Description

La présente invention a pour objet une valve de contrôle de flux interposée dans un circuit fermé de circulation d'un fluide susceptible de se trouver à deux températures différentes, ladite valve comprenant, d'une part, un tube d'écoulement présentant au moins un orifice d'admission dudit fluide à sa première température, par exemple chaud, depuis un réservoir vers un récepteur où se produit la variation de température, et au moins un passage de restitution dudit fluide à sa seconde température, par exemple froid, depuis le récepteur vers le réservoir où se produit une variation inverse de température et, d'autre part, des premiers moyens adaptés à obturer le ou les passages de restitution tandis que le ou les orifices d'admission sont ouverts et des seconds moyens adaptés à obturer le ou lesdits orifices d'admission tandis que le ou lesdits passages de restitution sont ouverts.

L'invention est applicable, en particulier, à un appareil de friture industriel tel que décrit dans le FR-A 2 501 491 au nom du Demandeur.

Dans un tel appareil, il est prévu une zone tampon où l'huile, destinée à être admise extemporanément dans la cuve de friture, que l'on appellera ci-après tête de friture, est maintenue à la température idéale de friture. Lorsque cette huile se trouve dans la tête de friture, elle perd en quelques secondes une grande partie de sa messe calorique au profit des aliments à frire. Cette huile est ensuite évacuée de la tête de friture et ramenée dans un réservoir que alimente la zone tampon, en évitant toutefois que l'huile refroidie ne vienne se mélanger avec l'huile chaude en attente pour la prochaine opération de friture.

A cet effet, selon la technique antérieure, l'huile emprunte deux canaux différents.

La présente invention a pour but de simplifier la structure existante en proposant une valve qui permet de n'utiliser qu'un seul canal sans que l'huile refroidie puisse se mélanger de manière significative avec l'huile chaude en attente.

Cette valve permet à l'appareil de friture de fonction ner sans discontinuité et sans faire appel à des moyens de chauffe excessifs qui "craqueraient" l'huile.

Le but poursuivi est atteint en ce sens que le tube d'écoulement est immergé dans le réservoir et offre un tronc commun (C) à l'écoulement en admission et en restitution et en ce que le ou les passages de restitution débouchent, dans le réservoir, nettement à l'écart du ou des orifices d'admission, grâce à quoi il ne se produit pas de mélange significatif entre l'huile se trouvant à sa première température, et prête à être admise dans le récepteur, et l'huile se trouvant à sa seconde température et venant d'être restituée depuis le récepteur.

Selon l'invention, le tronc commun se trouve en aval du ou des orifices d'admission, ou dans le sens de l'admission du fluide, un tronc commun à l'écoulement en admission et en restitution.

Dans une forme de réalisation pratique de l'invention, le ou lesdits orifices d'admission sont pratiqués dans la paroi du tube d'écoulement et ledit passage de restitution est constitué par un espace laissé vacant entre, d'une part, une section du tube lui-même et, d'autre part, une soupape mobile dans le tube et susceptible de coopérer avec un rétrécissement de ladite section pour obturer ledit passage de restitution, ladite soupape constituant ainsi lesdits premiers moyens d'obturation.

Les seconds moyens d'obturation sont constitués, quant à eux, par un premier clapet coulissant en forme de timbale à fond ajouré, ledit premier clapet étant orienté de sorte que son fond soit toujours en aval du ou des orifices d'admission de fluide, vu dans le sens de l'admission du fluide à sa première température, et dont la paroi périphérique est co-axiale audit tube, ladite paroi étant susceptible de venir obturer le ou les orifices d'admission.

Dans une forme d'exécution préférée de l'invention, la soupape et le premier clapet sont solidaires d'une tige coulissante co-axiale audit tube, la course de ladite tige étant limitée par deux butées montées sur ladite tige et situées de part et d'autre d'une plaque susceptible d'être maintenue immobile dans ledit tube et que traverse ladite tige, l'ensemble tige/premier clapet/soupape occupant, en situation dite normale, une position telle que le passage de restitution est ouvert tandis que le ou les orifices d'admission sont fermés, et étant amené dans une position telle que le passage de restitution est fermé tandis que le ou les orifices d'admission sont ouverts sous l'effet d'une pression s'exerçant sur la soupape en direction du rétrécissement du tube.

Cette pression est exercée par l'huile lorsqu'elle est refoulée vers la tête de friture.

Dans une forme d'exécution pratique de l'invention, le tube est vertical et le passage de restitution est situé plus bas que le ou les orifices d'admission, l'ensemble tige/premier clapet/soupape occupant ladite situation normale par simple gravité.

L'ensemble tige/premier clapet/soupape revient toutefois à sa situation normale, depuis sa position d'obturation du passage de restitution, sous l'effet d'une dépression s'exerçant sur la soupape en sens contraire de la pression précitée.

Avantageusement, la plaque, de part et d'autre de laquelle sont montées les butées limitant la course de la tige coulissante, est formée par le fond ajouré d'un second clapet semblable au premier et orienté de la même façon, ledit clapet étant immobilisé, à l'encontre de la force d'un ressort, entre un rétrécissement annulaire interne prévu dans ledit tube et une pièce amovible extractible du tube.

Le second clapet est monté coulissant sur la tige et, en l'absence de la pièce amovible extractible, le ressort se détend en entraînant le second clapet, la tige, le premier clapet et la soupape jusqu'à ce que le fond du premier clapet vienne en butée contre le rétrécissement annulaire interne du tube en obturant le passage central laissé vacant par ledit rétrécissement.

La pièce amovible extractible en question est, dans l'application considérée, une cuve de friture cylindrique coulissant dans ledit tube. De cette manière, la tête de friture est démontable, ce qui facilite le nettoyage. Lorsqu'elle est extraite du tube, le

passage laissé vacant par le rétrécissement est immédiatement obturé par le fond du premier clapet, ce qui empêche l'huile bouillante d'être projetée vers l'extérieur si une fausse manoeuvre est exécutée par le service d'entretien s'occupant de la machine.

La présente invention concerne également l'application de la valve précédemment décrite à l'alimentation d'une cuve de friture en huile chaude suivie de l'évacuation de l'huile refroidie par l'échange thermique avec les aliments à frire, sans mélange significatif entre le courant chaud et le courant refroidi.

L'invention est décrite ci-après avec davantage de détails, par référence aux dessins annexés dans lesquels :

- la figure 1 est une vue en coupe de la valve selon l'invention en position normale basse de restitution de l'huile refroidie,
- la figure 2 est une vue similaire à la figure 1 mais en position haute d'admission de l'huile chaude,
- la figure 3 est une vue similaire de la valve des figures 1 et 2 après extraction de la tête de friture amovible, et
- la figure 4 est une vue schématique d'ensemble, partiellement en coupe, montrant l'interposition de la valve entre le réservoir et la tête de friture.

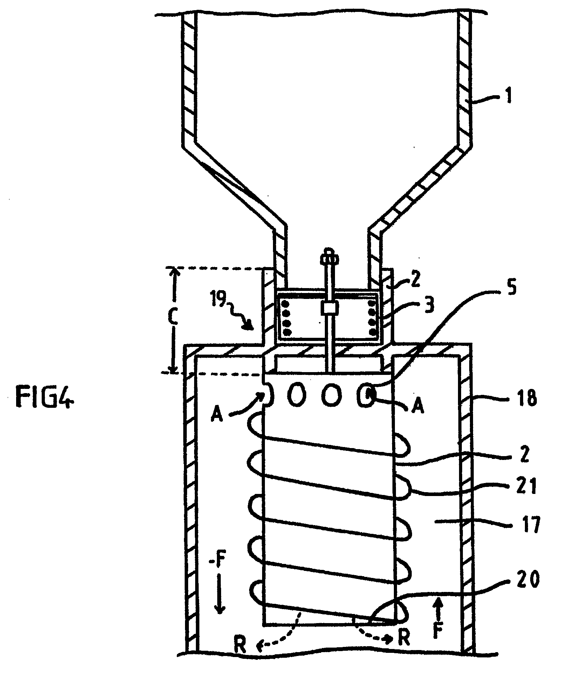

Si l'on se réfère tout d'abord à la figure 4, on voit une tête de friture 1 susceptible d'être alimentée extemporanément en huile chaude et d'être vidée dès l'opération de friture terminée, et un réservoir 18 contenant de l'huile 17 susceptible d'être soumise à une pression F, pour son admission dans la tête de friture 1, ou à une dépression -F, pour sa restitution, dans le réservoir 18, ce par des moyens appropriés, tels que ceux décrits dans le FR-A 2.501.491. Des moyens de chauffage, schématisés en 21, assurent le chauffage de l'huile à la température optimale de friture. Une valve de contrôle, généralement désignée par 19, relie la tête de friture 1 au réservoir 18. Comme on le voit, la valve 19 comprend un tube d'écoulement 2 dans la partie supérieure duquel est engagée la tête de friture 1, et dont l'extrémité inférieure 20 débouche librement dans la partie inférieure du réservoir.

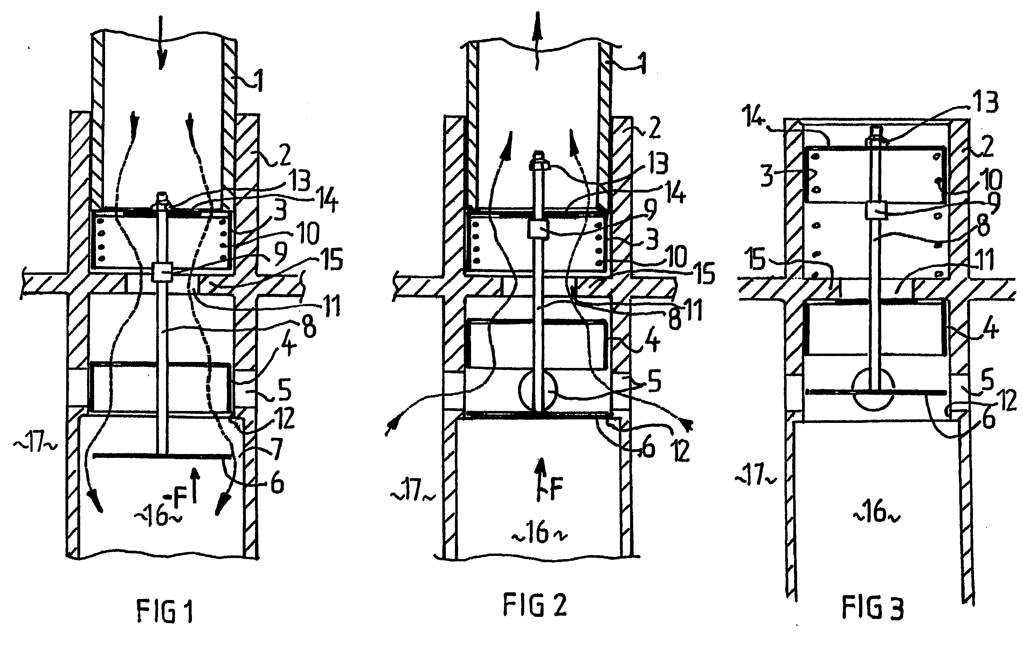

Si l'on en vient aux figures 1 et 2, on voit que la tête de friture 1 est en appui sur le fond ajouré d'un clapet 3 en forme de timbale dont l'ouverture est dirigée vers le bas. La tête de friture 1 est montée coulissante dans le tube 2 et elle est munie de joints élastomères, non représentés, assurant l'étanchéité entre elle-même et le tube 2. Le tube d'écoulement 2 présente un rétrécissement annulaire 15 sur lequel prend appui le bord libre du clapet 3. Un ressort comprimé 10 est maintenu entre le fond du clapet 3 et le rétrécissement annulaire 15. Au-delà du rétrécissement annulaire 15 est situé un clapet 4 à fond ajouré, semblable au clapet 3 et orienté de la même manière que le clapet 3. Une tige directionnelle 8 est montée coulissante au travers du fond 14 du clapet 3 et sa course est limitée par un écrou 13 et une butée 9. A cette tige 8 sont fixés le fond du clapet 4 et une soupape 6.

Au-dessous du rétrécissement annulaire 15, le tube présente une série d'orifices d'admission 5 au-delà desquels la paroi du tube 2 est de moindre épaisseur. Le bord libre de la soupape 6 est susceptible de venir en vis-à-vis de la paroi interne 12 du tube 2 immédiatement au-dessous des passages 5 et de réduire le passage 7 à la taille d'un interstice insignifiant. Comme on le voit, l'extrémité inférieure libre 20 du tube d'écoulement 2 débouche bien à l'écart de la zone des orifices d'admission ou ouvertures 5 (Fig. 4).

En position normale (Fig. 1), sous l'effet de la gravité, la tige 8 coulisse vers le bas et sa course est arrêtée par l'écrou 13 butant contre le fond du clapet 3. Dans cette position de la tige, le clapet 4 se trouve en vis-à-vis des ouvertures 5 et interdit l'admission d'huile chaude dans la tête de friture. L'huile refroidie s'écoule par les trous pratiqués dans le fond ajouré 14 du clapet 3, par le passage 11, par les trous pratiqués dans le fond du clapet 4 et par l'espace 7 laissé vacant entre le bord libre de la soupape 6 et la paroi interne du tube 2. Cette huile refroidie ne peut se mêler qu'à celle contenue dans le fond du réservoir 18 dans lequel débouche l'extrémité libre 20 du tube 2 (flèches R - Fig. 4).

Lorsque de l'huile doit être admise dans la tête de friture, une pression est exercée sur l'huile 17 qui est refoulée vers le haut. Dans les premiers instants de cette phase, l'huile chaude se trouvant dans la partie supérieure du réservoir ne peut pénétrer par les orifices 5 qui sont obturés par le clapet 4, mais dès que l'huile se trouvant dans l'espace 16 et soumis à la même pression a repoussé la soupape 6 dans la position de la figure 2 selon la flèche F, le passage 7 se réduit à un interstice insignifiant et les orifices d'admission 5 s'ouvrent : l'huile refroidie ne peut pratiquement plus pénétrer dans la tête de friture tandis que l'huile chaude de la partie supérieure du réservoir est maintenant libre de passer par les orifices 5 vers la tête de friture 1 selon les flèches A (Fig. 4). On conçoit que, de cette manière, c'est de l'huile chaude qui est admise dans la tête de friture 1, la quantité d'huile refroidie susceptible d'y pénétrer également étant infime.

La course de la tige 8 est limitée par la butée 9 qui vient en appui contre le fond 14 du clapet 3, la distance entre cette butée 9 et la soupape 6 étant réglée pour que la soupape 6 vienne en coïncidence exacte avec la paroi interne 12 du tube 2 immédiatement au-dessous des orifices d'admission 5.

Lorsque l'opération de friture est terminée, une dépression -F est exercée sur la soupape 6 (Fig. 1 et 4) qui, en redescendant, libère le passage 7, tandis que le clapet 4 vient obturer les orifices d'admission.

On comprend que sur le tronçon C (Fig. 4) le fluide parcourt le tube d'écoulement aussi bien en admission qu'en restitution.

Si l'on se réfère maintenant à la figure 3, on voit que la tête de friture 1 a été extraite du tube 2. Plus aucune force ne s'exerçant sur le fond 14 du clapet 3, le ressort 10 se détend en éloignant le clapet 3 du rétrécissement annulaire 15. Ce faisant, le clapet 3 entraîne la tige 8 avec le clapet 4 et la soupape 6 qui lui sont fixés. La course de la tige 8 est limitée par la venue en butée du fond du clapet 4 contre le rétrécissement annulaire 15. Ce faisant, le fond du clapet 4 bouche le passage 11. De cette manière, l'espace situé au-dessus du rétrécissement annulaire 15 est totalement isolé de l'alimentation en huile.

L'invention n'est pas limitée à la forme d'exécution décrite et représentée. En particulier, elle pourrait être appliquée à la circulation d'un liquide réfrigérant qui, à l'inverse de l'application décrite, échangerait des frigories avec des produits à refroidir.

**Revendications**

1. Valve de contrôle de flux interposée dans un circuit fermé de circulation d'un fluide susceptible de se trouver à deux températures différentes, ladite valve comprenant, d'une part, un tube d'écoulement (2) présentant au moins un orifice d'admission (5) dudit fluide à sa première température depuis un réservoir (18) vers un récepteur (1) où se produit la variation de température et au moins un passage de restitution (7) dudit fluide à sa seconde température depuis le récepteur (1) vers le réservoir (18) où se produit une variation inverse de température et, d'autre part, des premiers moyens (6) adaptés à obturer le ou lesdits passages de restitution (7) tandis que le ou lesdits orifices d'admission (5) sont ouverts, et des seconds moyens (4) adaptés à obturer le ou lesdits orifices d'admission (5) tandis que le ou lesdits passages de restitution (7) sont ouverts, caractérisé en ce que le tube d'écoulement (2) est immergé dans le réservoir (18) et offre un tronc commun (C) à l'écoulement en admission et en restitution et en ce que le ou lesdits passages de restitution (7) débouchent (en 20), dans le réservoir (18), nettement à l'écart du ou des orifices d'admission (5), grâce à quoi il ne se produit pas de mélange significatif entre le fluide se trouvant à sa première température, et prêt à être admis dans le récepteur (1), et le fluide se trouvant à sa seconde température et venant d'être restitué depuis le récepteur (1).

2. Valve selon la revendication 1, caractérisée en ce que le tronc commun (C) se trouve en aval du ou des orifices d'admission (5), vu dans le sens de l'admission du fluide.

3. Valve selon la revendication 1 ou 2, caractérisée en ce que le ou lesdits orifices d'entrée (5) sont pratiqués dans la paroi dudit tube d'écoulement (2) et en ce que ledit passage de sortie (7) est constitué par un espace laissé vacant entre, d'une part, une section du tube (2) lui-même et, d'autre part, une soupape mobile (6) dans le tube et susceptible de coopérer avec un rétrécissement (12) de ladite section pour obturer ledit passage de sortie (7), ladite soupape (6) constituant ainsi lesdits premiers moyens d'obturation.

4. Valve selon la revendication 3, caractérisée en ce que lesdits seconds moyens d'obturation (4) sont constitués par un premier clapet coulissant en forme de timbale à fond ajouré, ledit premier clapet étant orienté de sorte que son fond soit toujours en aval du ou des orifices d'entrée (5) de fluide, vu dans le sens de l'admission du fluide à sa première température, et, dont la paroi périphérique est coaxiale audit tube (2), ladite paroi étant susceptible de venir obturer le ou lesdits orifices d'admission.

5. Valve selon la revendication 4, caractérisée en ce que ladite soupape (6) et ledit premier clapet (4) sont solidaires d'une tige coulissante (8) coaxiale audit tube (2), la course de ladite tige (8) étant limitée par deux butées (13, 9) montées sur ladite tige et situées de part et d'autre d'une plaque (14) susceptible d'être maintenue immobile dans ledit tube (2) et que traverse ladite tige (8), l'ensemble tige/premier clapet/soupape occupant, en situation dite normale, une position telle que le passage de sortie (7) est ouvert tandis que le ou les orifices d'entrée (5) sont fermés, et étant amené dans une position telle que le passage de sortie (7) est fermé tandis que le ou les orifices d'entrée (5) sont ouverts sous l'effet d'une pression F s'exerçant sur la soupape (6) en direction du rétrécissement (12) du tube.

6. Valve selon la revendication 5, caractérisée en ce que le tube (2) est vertical et en ce que le passage de sortie (7) est situé plus bas que le ou les orifices d'entrée (5), l'ensemble tige/premier clapet/soupape occupant ladite situation normale par simple gravité.

7. Valve selon la revendication 5, caractérisée en ce que l'ensemble tige/premier clapet/soupape (8, 4, 6) revient à sa situation dite normale, depuis sa position d'obturation du passage de restitution (7), sous l'effet d'une dépression -F s'exerçant sur la soupape (6) en sens contraire de la force F.

8. Valve selon la revendication 4 ou 5, caractérisée en ce que ladite plaque (14) est formée par le fond ajouré d'un second clapet (3) semblable au premier et orienté de même façon, ledit clapet (3) étant immobilisé, à l'encontre de la force d'un ressort (10), entre un rétrécissement annulaire interne (15) prévu dans ledit tube et une pièce amovible (1) extractible du tube (2).

9. Valve selon la revendication 8, caractérisée en ce que le second clapet (3) est monté coulissant sur ladite tige (8) et en ce qu'en l'absence de la pièce amovible extractible (1), ledit ressort (10) se détend en entraînant le second clapet (3), la tige (8), le premier clapet (4) et la soupape (6) jusqu'à ce que le fond du premier clapet (4) vienne en butée contre ledit rétrécissement annulaire interne (15) en obturant le passage central (11) laissé vacant par ledit rétrécissement.

10. Valve selon la revendication 8 ou 9, caractérisée en ce que la pièce amovible extractible (1) est une cuve de friture cylindrique coulissant dans ledit tube (2).

11. Application de la valve selon l'une quelconque des revendications 1 à 10 à l'alimentation d'une cuve de friture en huile chaude suivie de l'évacuation de l'huile refroidie par l'échange thermique avec les aliments à frire, sans mélange significatif entre le courant chaud et le courant refroidi.

**Claims**

1. A flow control valve inserted in a closed circuit for the flow of a fluid likely to be at two different temperatures, said valve comprising on the one hand, a flow tube (2) having at least one admission orifice (5), of said fluid at its first temperature from a reservoir (18) to a receiver (1) where the temperature variation occurs and at least one return passage (7) of said fluid at its second temperature from the receiver (1) towards the reservoir (18) where an inverse temperature variation occurs and on the other hand, first means (6) adapted to close off the return passage or passages (7) whilst the admission orifice or orifices (5) are open, and second means (4) adapted to close off the admission orifice or orifices (5) whilst the return passage or passages (7) are open characterized in that the flow tube (2) is immersed in the reservoir (18) and provides a common section (C) both for the admission and return flow, and in that the return passage or passages (7) open out (at 20) into the reservoir (18) at a substantial distance from the admission orifice or orifices (5) whereby no appreciable mixing occurs between the fluid at its first temperature and ready to be admitted into the receiver (1) and the fluid at its second temperature and returned from the receiver (1).

2. Valve according to claim 1, characterized in that the common section (C) is located downstream of the admission orifice or orifices (5) in the direction of admission of the fluid.

3. The valve according to claim 1 or 2, characterized in that said admission orifice or orifices (5) are formed in the wall of said flow tube (2) and in that said return passage (7) is formed by a space left vacant between a section of the tube itself and a mobile mushroom valve (6) in the tube and able to cooperate with a narrowed portion (12) of said section for closing said outlet passage (7), said mushroom valve (6) thus forming said first closure means.

4. The valve according to claim 3, characterized in that second closure means (4) are formed by a first sliding valve in the form of a cup with perforated bottom, said first cup valve being oriented so that its bottom is always downstream of the fluid admission orifice or orifices (5), seen in the direction of admission of the fluid at its first temperature, and whose peripheral wall is coaxial to said tube (2), said wall being able to close said admission orifice or orifices.

5. Valve according to claim 4, characterized in that said mushroom valve (6) and said first cup valve (4) are intergral with a sliding rod (8) coaxial with said tube (2), the stroke of said rod (8) being limited by two stops (13, 9) munted on said rod and situated on each side of a plate (14) able to be held immobile in said tube (2) and which said rod (8) passes through, the rod/first cup valve/mushroom valve assembly occupying, in a normal situation, a position such that the return passage (7) is open whereas the admission orifice or orifices (5) are closed and being brought into a position such that the return passage (7) is closed whereas the admission orifice or orifices (5) are open under the effect of a pressure F exerted on the mushroom valve (6) in the direction of the narrowed portion (12) of the tube.

6. The valve according to claim 5, characterized in that the tube (2) is vertical and in that the return passage (7) is situated lower than the admission orifice or orifices (5), the rod/first cup valve/mushroom valve assembly occupying said normal situation by simple gravity.

7. Valve according to claim 5, characterized in that the rod/first cup valve/mushroom valve (8, 4, 6) assembly returns to its so called normal situation from its position for closing off the return passage (7) under the effect of a depression -F exerted in the valve (6) in the opposite direction to the force F.

8. The valve according to claim 4 or 5, characterized in that said plate (14) is formed by the perforated bottom of a second cup valve (3) similar to the first one and oriented in the same way, said cup valve (3) being immobilized against the force of a spring (10), between an internal annular narrowed portion (15) provided in said tube and a removable piece (1) extractable from the tube (2).

9. The valve according to claim 8 characterized in that the second cup valve (3) is mounted for sliding on said rod (8) and in that, in the absence of the extractable removable piece (1), said spring (10) expands while driving the second cup valve (3), the rod (8), the first cup valve (4) and the mushroom valve (6) until the bottom of the first cup valve (4) comes into abutment against said internal annular narrowed portion (15) and closes the central passage (11) left vacant by said narrowed portion.

10. The valve according to claim 8 or 9, characterized in that the extractable removable piece (1) is a cylindrical frying tank sliding in said tube (2).

11. Application of the valve according to any one of claim 1 to 10 to the feeding of a frying tank with hot oil followed by discharge of the oil cooled by the heat exchange with the foods to be fried, without there being a significant mixing between the hot stream and the cooled stream.

## Patentansprüche

1. Flußsteuerventil, das in einem geschlossenen Zirkulationskreislauf eines Fluides zwischengeschaltet ist, das geeignet ist, zwei unterschiedliche Temperaturen einzunehmen, wobei das Ventil einerseits ein Abflußrohr (2) aufweist, das wenigstens eine Eintrittsöffnung (5) des Fluides bei seiner ersten Temperatur von einem Reservoir (18) zu einem Aufnehmer (1) aufweist, wo die Veränderung der Temperatur vonstatten geht, und wenigstens einen Wiederherstellungskanal (7) des Fluides auf seine zweite Temperatur aufweist, von dem Aufnehmer (1) zu dem Reservoir (18) wo eine umgekehrte Temperaturveränderung vonstatten geht, und, andererseits erste Einrichtungen (6) aufweist, die geeignet sind, den oder die Wiederherstellungskanäle (7) zu verschließen, während die Eintrittsöffnungen (5) geöffnet sind, und zweite Einrichtungen (4) aufweist, die geeignet sind, die Eintrittsöffnung oder die Eintrittsöffnungen (5) zu verschließen, während der oder die Wiederherstellungskanäle (7) geöffnet sind, dadurch gekennzeichnet, daß das Abflußrohr (2) in das Reservoir (18) eingetaucht ist und eine Gemeinschaftsstrecke (C) des Abflusses beim Eintritt und bei der Wiederherstellung bietet, und daß der oder die Wiederherstellungskanäle (7) (bei 20) in das Reservoir (18) deutlich entfernt von der oder den Eintrittsöffnungen (5) münden, dank dessen, es keine wesentliche Mischung gibt zwischen dem Fluid, das sich in seiner ersten Temperatur befindet, und das bereit ist, in den Aufnehmer (1) aufgenommen zu werden, und dem Fluid erzeugt wird, das sich auf seiner zweiten Temperatur befindet und von dem Aufnehmer (1) gerade dahin zurückgebracht wurde.

2. Ventil nach Anspruch 1, dadurch gekennzeichnet, daß die gemeinsame Strecke (C) sich stromab der Eintrittsöffnung oder Eintrittsöffnungen (5) befindet, gesehen in Eintrittsrichtung des Fluids.

3. Ventil nach Anspruch 1 oder 2, dadurch gekennzeichnet, daß die Eintrittsöffnung oder die Eintrittsöffnungen (5) in der Seitenwand des Abflußrohrs (2) ausgebildet sind, und daß der Ausgangkanal (7) von einem Raum gebildet ist, der einerseits zwischen einem Abschnitt des Rohres (2) selbst und andererseits einem bewegbaren Ventil (6) in dem Rohr freigelassen ist, und geeignet ist, mit einer Verringerung (12) des Querschnitts zusammenzuwirken, um den Ausgangskanal (7) zu verschließen, wobei das Absperrorgan (6) so die ersten Verschlußeinrichtungen bildet.

4. Ventil nach Anspruch 3, dadurch gekennzeichnet, daß die zweite Verschlußeinrichtungen (4) durch ein erstes gleitbewegliches Sperrventil in Form eines Topfes mit durchbrochenem Boden gebildet sind, wobei die erste Klappe so ausgerichtet ist, daß ihr Boden stets stromab der Eintrittsöffnung oder der Eintrittsöffnungen (5) des Fluides angeordnet ist, gesehen in Richtung des Eintritts des Fluids bei seiner ersten Temperatur und deren Umfangswand koaxial zum Rohr (2) verläuft, wobei die Wand geeignet ist, die Eintrittsöffnung oder die Eintrittsöffnungen zu verschließen.

5. Ventil nach Anspruch 4, dadurch gekennzeichnet, daß das Ventil (6) und das erste Sperrventil (4) mit einer gleitbeweglichen Stange (8) verbunden sind, die koaxial zum Rohr (2) verläuft, wobei die Strecke der Stange (8) durch zwei Anschläge (13, 9) begrenzt ist, die auf der Stange angeordnet sind und einerseits und andererseits einer Platte (14) angeordnet sind, die geeignet ist, unbeweglich in dem Rohr (2) gehalten zu werden, und die von der Stange (8) durchsetzt ist, wobei die Anordnung Stange/erstes Ventil/Sperrventil in einer als normal bezeichneten Stellung eine Position derart einnimmt, daß der Ausgangskanal (7) geöffnet ist, während die Eintrittsöffnung oder Eintrittsöffnungen (5) geschlossen sind, und in eine Position gebracht wird, derart, daß der Ausgangskanal (7) geschlossen ist, während die Eintrittsöffnung oder Eintrittsöffnungen (5) geöffnet sind unter der Einwirkung einer Kraft (F), die auf das Absperrorgan (6) in Richtung der Verjüngung (12) des Rohres wirkt.

6. Ventil nach Anspruch 5, dadurch gekennzeichnet, daß das Rohr (2) vertikal ist, und daß der Ausgangskanal (7) weiter unten angeordnet ist als die Eintrittsöffnung oder Eintrittsöffnungen (5), wobei die Anordnung Stange/erstes Ventil/Sperrventil die normale Stellung einfach durch Schwerkraft einnimmt.

7. Ventil nach Anspruch 5, dadurch gekennzeichnet, daß die Anordnung Stange/erstes Ventil/Sperrventil (8, 4, 6) in seine als normal bezeichnete Stellung von seiner Verschließstellung des Wiederherstellungskanals (7) zurückkommt, unter dem Effekt eines Unterdrucks (-F), der auf das Sperrventil (6) in umgekehrter Richtung zur Kraft (F) wirkt.

8. Ventil nach Anspruch 4 oder 5, dadurch gekennzeichnet, daß die Platte (14) durch den durchbrochenen Boden eines zweiten Ventils (3) ähnlich des ersten gebildet ist, und in gleicher Weise ausgerichtet ist, wobei das Ventil (3) unbeweglich wird bei Zusammentreffen mit der Kraft einer Feder (10) zwischen einer inneren ringförmigen Verjüngung (15), die in dem Rohr vorgesehen ist und einem bewegbaren Stück (1), das aus dem Rohr (2) entfernbar ist.

9. Ventil nach Anspruch 8, dadurch gekennzeichnet, daß das zweite Ventil (3) gleitbeweglich auf der Stange (8) angeordnet ist, und daß bei Wegfall des beweglichen entfernbaren Stücks (1), die Feder (10) sich unter Mitnahme des zweiten Ventils (3), der Stange (8), des ersten Ventils (4) und das Sperrventils (6) entspannt, bis der Boden des ersten Ventils (4) in Anschlag kommt gegen die ringförmige innere Verjungung (15) unter Verschließung des zentralen Kanals (11), der durch die Verjüngung freigelassen wird.

10. Ventil nach Anspruch 8 oder 9, dadurch gekennzeichnet, daß das entfernbare bzw. herausnehmbare bewegbare Stück (1) ein zylindrischer Fritierbehälter ist, der in dem Rohr (2) gleitet.

11. Verwendung des Ventils nach einem der Ansprüche 1 bis 10 zur Speisung einer Fritiervorrichtung mit heißem Öl gefolgt von der Ableitung des abgekühlten Öls durch Wärmeaustausch mit den fritierenden Nahrungsmitteln, ohne wesentliche Mischung zwischen dem heißen Strom und dem abgekühlten Strom.

FIG 1

FIG 2

FIG 3

FIG4